# EUROPEAN PATENT SPECIFICATION

(11) **EP 1 650 894 B1**
(45) Date of publication and mention of the grant of the patent: **09.02.2011**
(21) Application number: 05022906.1
(22) Date of filing: 20.10.2005
(51) Int. Cl.: H04L 9/32

(54) **Authentication method and method, device, system, and program for delivering secret information between proximity terminals**
Authentifizierungsverfahren und Verfahren, Einrichtung, System und Programm für Lieferung von geheimen Informationen zwischen Proximity-Geräten
Procédé d'authentification et procédé, équipement, système et programme de délivrance d'informations secrètes entre terminaux de proximité

(30) Priority: 22.10.2004 JP 2004308236
(43) Date of publication of application: 26.04.2006
(73) Proprietor: NEC Corporation, Minato-ku Tokyo 108-8001 (JP)
(72) Inventor: Karusawa, Kiyoko, Minato-ku, Tokyo (JP)
(74) Representative: Vossius & Partner

(56) References cited:
- GB-A- 2 381 700
- US-A1- 2001 016 909
- US-A1- 2003 041 244
- US-A1- 2004 068 470

## Description

The present invention relates to an authentication method and a method, a device, a system, and a program for delivering secret information between proximity terminals. More specifically, the invention relates to a technique featuring a communication path/method for authentication and delivery of the secret information.

Short-range wireless communications technologies such as Bluetooth (registered mark), UWB (Ultra Wide Band), and a wireless LAN (Local Area Network) have rapidly widespread. In recent years, communication functions using these are widely being adopted for cellular phones and PDAs (Personal Digital Assistants) as well. By connecting devices equipped with these short-range wireless communications technologies to each other and performing a dial-up connection, a fax connection, or a personal ad hoc connection, various wireless data communications have become possible. Japanese Patent Kokai Publication No. JP-P2004-40676A, for example, introduces a cellular phone system in which by using a short-range wireless communication function, calls have been enabled.

These short-range wireless communications, however, feature nondirectivity. Accordingly, these communications may be exposed to the danger of being intercepted by a malicious person or the like. Hence, from the viewpoint of ensuring security in a segment using this short-distance wireless communication, an authentication technology and an encryption technology are employed.

In the Bluetooth (registered trademark), for example, when connection is established with a terminal that has never been connected before, input of a password (also referred to as a pass key) called a PIN code (Personal Identification Number code) is necessary. This PIN code is normally input through an operation from a user. As the PIN code, the same value is input at two terminals to be connected, respectively.

Each of the terminals exchanges the input PIN code and the result of authentication computed using arbitrary computation parameters such as a random number, a terminal address, or the like between each other, and can determine whether to authorize or reject a request for connection from other connected party according to whether a match of the result of authentication is obtained or not. This scheme can also reject a request for connection from a terminal that is not desired for connection.

An encryption key is generated through a negotiation between the terminals, mutual connection of which has been authorized. Since a subsequent data transfer is performed by encryption using this encryption key, it becomes possible to ensure confidentiality.
[Patent Document 1]
Japanese Patent Kokai Publication No. JP-P2004-40676A

In order to verify validity of a person who actually uses a device, the PIN code described above is manually input every time a connection is started. From the viewpoint of ensuring security, it is preferable that the PIN code has a sufficient length. An input error or the like, however, tends to occur. On the contrary, when the PIN code is extremely shortened with emphasis placed on easiness to input, a problem will arise that sufficient security cannot be ensured.

Since the negotiation in regard to the encryption key is performed by a wireless communication, it is necessary to consider a possibility that the encryption key is stolen, as well.

Further, when the problem described above is solved, it is necessary to consider the computation ability and resources of these terminals to a certain extent. When one party is the device of a portable type, in particular, encryption processing that requires a massive amount of computation steps sometimes becomes an excessive burden.

US 2001/0016909 A1 is directed to an ad hoc communication network and a method for establishing a security association in an ad hoc network.

US 2004/0068470 A1 relates to a secure system and method for distributing and verifying encryption and decryption keys as used in any public-key encryption scheme to provide confidentiality and authenticity.

GB 2381700 A is directed to verification at a receiving station of authenticity and integrity of information transmitted over the air to the receiving station from a transmitting station.

UPS 2003/0041244 A1 concerns a method for securing a session between a terminal and a user equipment comprising cryptographic computing means, for example in a smart card.

The present invention has been made in view of circumstances described above. It is an object to provide a method of enabling authentication and a method of enabling safe delivery of secret information without excessively burdening a system and a user.

According to a first aspect of the present invention, there is provided a method of performing authentication between terminals each comprising a visible code reading unit capable of reading a visible code. This authentication method can be broadly constituted by the following three steps:
a first step of generating an authentication key x using a predetermined key generator according to a request from a second terminal and converting the authentication key x into a first visible code, for display, by a first terminal;
a second step of reading the first visible code to extract the authentication key, performing a computation according to a predetermined encryption formula, thereby obtaining a ciphertext X from the authentication key x, and converting the ciphertext X into a second visible code, for display, by said second terminal; and
a step of reading the second visible code to extract the ciphertext X, obtaining an authentication key x' from the ciphertext X using a predetermined decoding formula, and authenticating said second terminal when the authentication key x matches the authentication key x', by said first terminal.

The first, second and third steps are summarized as follows:

### (First Step)

First, a first terminal (system side terminal) generates an authentication key (challenge code) x using a predetermined key generator according to a request from a second terminal (authorized side terminal), and convert the generated authentication (challenge code) x into a first visible code, for display.

### (Second Step)

When the first visible code is displayed, a second terminal (terminal to be authenticated termed "authenticated side terminal") reads this first visible code, thereby extracting the authentication key (challenge code) x. The second terminal also uses a predetermined computation formula to perform encryption, thereby obtaining a cyphertext X. The second terminal converts this cyphertext X into a second visible code, for display.

### (Third Step)

When the second visible code is displayed, the first terminal (system side terminal) reads this second visible code, thereby extracting the ciphertext X. The first terminal performs decoding processing on the ciphertext X, thereby obtaining an authentication key (response code) x'. When the authentication key x matches the authentication key x', the first terminal authenticates the other party terminal (authenticated side terminal).

According to a second aspect and further aspects of the present invention, there are provided terminals for carrying out the above-mentioned authentication method/secret information delivery method and various systems and programs capable of performing communication, business transaction, service provision, or the like after secret information has been delivered according to the above-mentioned secret information delivery method.
According to the second aspect, a terminal comprises:
a visible code reading unit capable of reading a visible code;
a visible code display unit for generating an authentication key x using a predetermined key generator according to a request from an other terminal and converting the authentication key x into a first visible code according to a predetermined rule, for display;
a visible code recognition unit for reading a second visible code displayed on a visible code display unit of said other terminal, thereby extracting a ciphertext X computed on a side of said other terminal using the authentication key x;
a computation unit for obtaining an authentication key x' from the ciphertext X using a computation formula capable of decoding the ciphertext X; and
an authentication deciding unit for authenticating said other terminal when the authentication key x matches the authentication key x'.

The meritorious effects of the present invention are summarized as follows.
According to the present invention, no input error will occur, and just by adopting already known encryption processing, validity of an other party terminal can be verified. Further, secret information can be safely transmitted to the other party terminal. The reason for this is that a configuration was adopted in which a user input step can be eliminated and a communication path with a low likelihood of being eavesdropped is used.

### BRIEF DESCRIPTION OF THE DRAWINGS

Fig. 1 is a block diagram showing a configuration of a first embodiment of the present invention;
Fig. 2 is a flowchart for explaining an operation of the first embodiment of the present invention;
Fig. 3 is a flowchart showing an example of an authentication method according to the present invention;
Fig. 4 is a block diagram showing a configuration of a second embodiment of the present invention; and
Fig. 5 is a flowchart for explaining an operation of the second embodiment of the present invention.

### PREFERRED EMBODIMENTS OF THE INVENTION

Next, a preferred mode for carrying out the present invention will be described. In this embodiment, when devices equipped with a short-range wireless communications technology such as Bluetooth (registered trade mark) or a wireless LAN establish a connection for a short-range wireless communication, security information such as an authentication key, an encryption key, or the like is converted into a barcode, and exchange of the security information is performed through the barcode (an example of visible code), thereby performing authentication of other party and also performing transmission of the encryption key to be used for the subsequent short-range wireless communication as secret information.

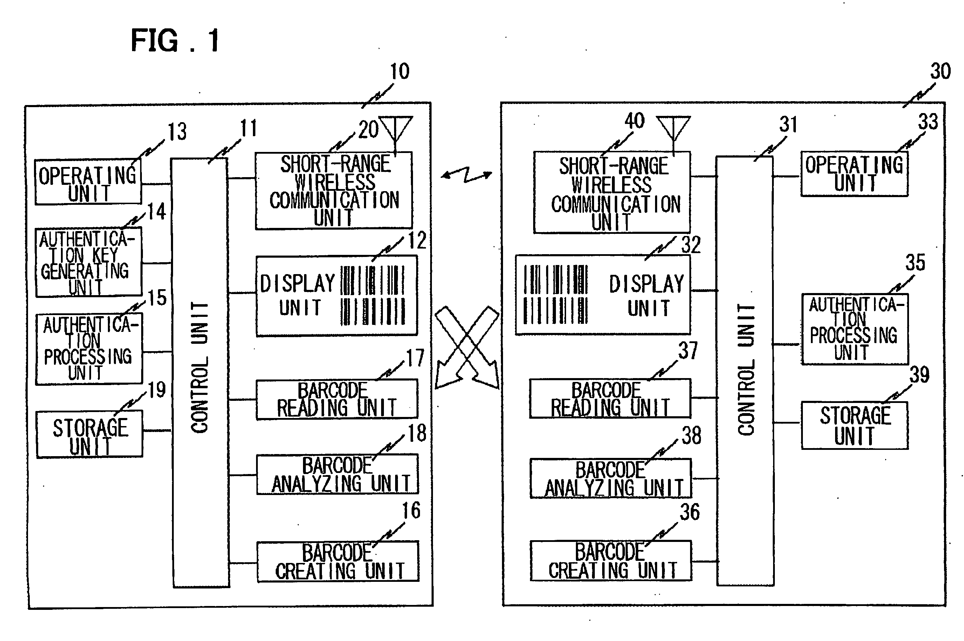

A case where a procedure starting side device (indicated by reference numeral 10 in Fig. 1) and a response side device (indicated by reference numeral 30 in Fig. 1) establish the connection for the short-range wireless communication will be described below. First, the procedure starting side device (indicated by reference numeral 10 in Fig. 1) uses an authentication key generating unit (key generator; indicated by reference numeral 14 in Fig. 1) to generate an authentication key. Then, the procedure starting side device (indicated by reference numeral 10 in Fig. 1) uses a barcode creating unit (indicated by reference numeral 16 in Fig. 1) to convert this authentication key into a barcode and display the barcode using a display unit (indicated by reference numeral 12 in Fig. 1). The procedure starting side device (indicated by reference numeral 10 in Fig. 1) uses an authentication processing unit (constituted from a computation unit and an acceptance deciding unit; indicated by reference numeral 15 in Fig. 1) to compute an authentication result X' from the authentication key.

The response side device (indicated by reference numeral 30 in Fig. 1) uses a barcode reading unit (indicated by reference numeral 37 in Fig. 1) to read the barcode displayed on the display unit (indicated by reference numeral 12 in Fig. 1) of the procedure starting side device (indicated by reference numeral 10 in Fig. 1). Then, the response side device (indicated by reference numeral 30 in Fig. 1) uses a barcode analyzing unit (or a barcode recognition unit; indicated by reference numeral 38 in Fig. 1) to analyze the read barcode, thereby obtaining the authentication key. Then, the response side device (indicated by reference numeral 30 in Fig. 1) uses an authentication processing unit (constituted from a computation unit and an acceptance deciding unit; indicated by reference numeral 35 in Fig. 1) to compute an authentication result X and the encryption key. Further, the response side device (indicated by reference numeral 30 in Fig. 1) uses a barcode creating unit (indicated by reference numeral 36 in Fig. 1) to convert the computed authentication result X and the computed encryption key into a barcode, for display by controlling a display unit (indicated by reference numeral 32 in Fig. 1).

The procedure starting side device (indicated by reference numeral 10 in Fig. 1) uses a barcode reading unit (indicated by reference numeral 17 in Fig. 1) to read the barcode displayed on the display unit (indicated by reference numeral 32 in Fig. 1) of the response side device (indicated by reference numeral 30 in Fig. 1). The procedure starting side device (indicated by reference numeral 10 in Fig. 1) uses a barcode analyzing unit (or a barcode recognition unit: indicated by reference numeral 18 in Fig. 1) to obtain the authentication result X and the encryption key from the read barcode. Then, the procedure starting side device verifies that the authentication result X' computed by the procedure starting device (indicated by reference numeral 10 in Fig. 1) itself matches the authentication result X obtained from the response side device (indicated by reference numeral 30 in Fig. 1) (X = X'), and then completes authentication processing.

From then on, the short-range wireless communication between the procedure starting side device (indicated by reference numeral 10 in Fig. 1) and the response side device (indicated by reference numeral 30 in Fig. 1) using the encryption key becomes possible.

Rectilinearity (straight propagating characteristics) of an image representing the visible code such as the barcode is high, so that exchange of information can only be performed in a more limited range than with the short-range wireless communication. The image may be therefore considered to be the one that has utilized a secret communication path. Accordingly, by exchanging the authentication key for authenticating the other party, its result of computation, and encryption key through the barcode, the subsequent short-range wireless communication can be made reliable and secure. Further, in a configuration assuming that a terminal is present at a position capable of reading the barcode as described above, detection of a person who eavesdrops exchanged information or the like is also facilitated, in other words. Concerned parties can therefore proceed with the procedure reliably.

More preferably, in order to compute the computation results X and X' from the authentication key, the encryption key at the time of a preceding access can be employed.

In the mode described above, delivery of the encryption key was aimed at. Delivery of other secret information can be performed using the same procedure. Further, when another authentication key added to the authentication result X and the encryption key computed by the response side device (indicated by reference numeral 30 in Fig. 1) is converted into a barcode, and when the procedure starting side device (indicated by reference numeral 10 in Fig. 1) sends an authentication result Y and the encryption key with respect to this another authentication key, exchange of the secret information can also be performed.

### [Embodiments]

Next, in order to describe the mode described above in more detail, some embodiments of the present invention will be described. Fig. 1 is a block diagram showing a configuration of a first embodiment of the present invention. Referring to Fig. 1, the procedure starting side device 10 and the response side device 30 are shown.

The procedure starting side device 10 includes a control unit 11, the display unit 12, an operating unit 13, the authentication key generating unit 14, the authentication processing unit 15, the barcode reading unit 17, the barcode analyzing unit 18, a storage unit 19, and a short-distance wireless communication unit 20.

The display unit 12 is a liquid crystal display device or the like provided for the procedure starting side device 10 for displaying a generated barcode and various information. The operating unit 13 is a key pad or the like provided for the procedure starting side device 10 through which a user performs various input operations.

The authentication key generating unit 14 is a unit for generating an authentication key used for the authentication processing before the short-range wireless communication with other device is performed. The authentication processing unit 15 is a unit for computing an authentication result X' by a predetermined computation method using the authentication key described above and information such as a random number or a device address and also verifying that this authentication result X' matches an authentication result X obtained from the response side device 30.

The barcode creating unit 16 is a unit for converting the generated authentication key into the barcode. The barcode reading unit 17 is a barcode scanner or a camera for reading the barcode displayed on the display unit 32 of the response side device 30. The bar code analyzing unit 18 analyzes the barcode read by the barcode reading unit 17, thereby obtaining the authentication result X and an encryption key.

The storage unit 19 is a unit for storing information related to the connection for the short-range wireless communication, such as the encryption key and the device address of the response side device 30. The short-distance wireless communication unit 20 is a unit for establishing the connection with the response side device 30 or other short-range wireless communication device using the short-range wireless communications technology such as the Bluetooth (registered mark) and the wireless LAN, thereby performing data transmission and data reception. Then, the control unit 11 performs control over the respective units described above.

Like the procedure starting side device 10, the response side device 30 also includes a control unit 31, the display unit 32, an operating unit 33, the authentication processing unit 35, the barcode creating unit 36, the barcode reading unit 37, the barcode analyzing unit 38, a storage unit 39, and a short-range wireless communication unit 40.

The display unit 32 is the liquid crystal display device or the like provided for the response side device 30 for displaying a generated barcode and various information. The operating unit 33 is the key pad or the like provided for the response side device 30 through which a user performs various input operations.

The authentication processing unit 35 is the unit for computing the authentication result X by the predetermined computation method using the authentication key described above and the information such as the random number or the device address and also verifying that this authentication result X matches the authentication result X' obtained from the procedure starting side device 10.

The barcode creating unit 36 is the unit for converting a generated authentication key into the barcode. The barcode reading unit 37 is the barcode scanner or the camera for reading the barcode displayed on the display unit 12 of the procedure starting side device 10. The bar code analyzing unit 38 analyzes the barcode read by the barcode reading unit 37, thereby obtaining the authentication result X' and the encryption key.

The storage unit 39 is the unit for storing information related to the connection for the short-range wireless communication, such as the encryption key and the device address of the procedure starting side device 10. The short-distance wireless communication unit 40 is the unit for establishing the connection with the procedure starting side device 10 or other short-range wireless communication device using the short-range wireless communications technology such as the Bluetooth (registered mark) and the wireless LAN, thereby performing data transmission and data reception. Then, the control unit 31 performs control over the respective units described above.

The barcode used in this embodiment is described as a two-dimensional barcode. Various barcode standards such as a one-dimensional barcode, the two-dimensional barcode, and a combination of these barcodes can be of course adopted if they can represent various keys and the authentication results. Alternatively, a method in which other visible code system using a symbol, an alphabet, or a numeral in place of the barcode can be generated, for optical reading and recognition.

A method of computing the authentication result X (X'), a method of combining the authentication result X(X') with the encryption key into one data, a method of converting this data into the barcode, and the like are defined in advance by a rule or the like.

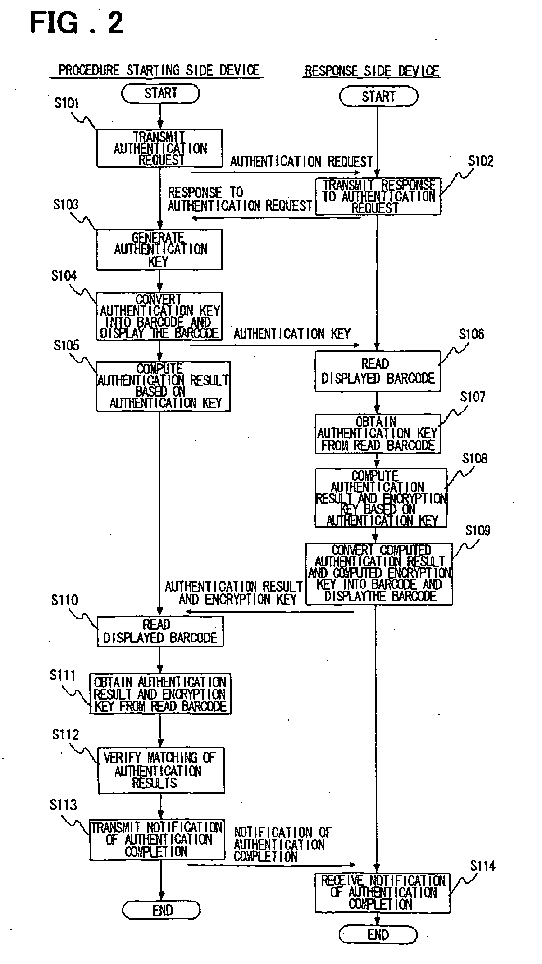

Next, operations of the embodiments will be described in detail using specific examples. Fig. 2 is a flowchart showing the operation of a first embodiment of the present invention. Referring to Fig. 2, in regard to the procedure starting side device 10 and the response side device 30, the procedure starting side device 10 first controls the short-distance wireless communication unit 20 to transmit an authentication request before connecting processing for the short-range wireless communication (at step S101). The response side device 30 that has received this authentication request controls the short-range wireless communication unit 40 to transmit a response to the authentication request (at step S102).

Upon receipt of this response to the authentication request, the procedure starting side device 10 controls the authentication key generating unit 14 to generate an authentication key (at step S103). Then, the procedure starting side device 10 controls the barcode creating unit 16 to convert the authentication key thus generated into a barcode, for display on the display unit 12 (at step S104). The procedure starting side device 10 generates 1234567890 as an authentication key Kninsyou, for example. The barcode creating unit 16 of the procedure starting side device 10 generates the barcode from which the result of barcode analysis of the 1234567890 can be obtained.

On the other hand, the response side device 30 that has transmitted the response to the authentication request controls the barcode reading unit 37 to read the barcode displayed on the display unit 12 of the procedure starting side device 10 at step S104 described above (at step S106). The response side device 30 analyzes this barcode by the barcode analyzing unit 38, and obtains the authentication key generated by the procedure starting side device 10 at step S103 described above (at step S107).

Next, the response side device 30 controls the authentication processing unit 35 to compute an authentication result X and an encryption key based on the authentication key thus obtained and the information such as the random number or the device address, for storage in the storage unit 39 (at step S108). Further, the barcode creating unit 36 of the response side device 30 converts the authentication result X and the encryption key computed at step S108 into a barcode. The response side device 30 controls the barcode creating unit 36 to display the converted barcode (at step S109).

Assume that the authentication key Kninsyou obtained from the barcode is 1234567890, for example, and that an example of the above-mentioned computation is described. Then, an authentication result Kkekkal (=2465799120 = 1234567890 + 1231231230) and an encryption key Kango ( = 1110000001 obtained by outputting one when the same number is in the same digit between the encryption key and data of device address) can be computed based on the authentication key Kninsyou (=1234567890) and a device address "1231231230" of the response side device 30. Further, from the authentication result Kkekkal ( = 2465799120) and the encryption key Kango (= 1110000001), one data "24657991201110000001" can be obtained.

The procedure starting side device 10, on the other hand, also controls the authentication processing unit 15 and computes an authentication result X' (=1234567890 + 1231231230 = 2465799120) based on the authentication key generated at step S103 described above and the known device address "1231231230" of the response side device 30 (at step S105). The procedure starting side device 10 controls the barcode reading unit 17 and reads the barcode (at step S110) when the barcode is displayed on the display unit 32 of the response side device 30 (at step S109). Then, the procedure starting side device 10 controls the bar code analyzing unit 18 to analyze the read barcode, obtains the authentication result X and the encryption key computed by the response side device 30 at step S108 described above, and stores the encryption key in the storage unit 19 (at step S111).

The procedure starting side device 10 controls the authentication processing unit 15 to verify that this authentication result X (=2465799120) obtained matches the authentication result X' (=2465799120) computed at step S105 described above (at step S 112).

When the authentication result X matches the authentication result X', or validity of the response side device 30 is recognized, the procedure starting side device 10 controls the short-distance wireless communication unit 20 to transmit a notification indicating completion of authentication (at step S113). The response side device 30 that has received the notification indicating completion of authentication controls the short-range wireless communication unit 40 to complete authentication processing (at step S114).

From then on, the procedure starting side device 10 and the response side device 30 control the short-distance wireless communication units 20 and 40 to use the short-range wireless communications technology between the procedure starting side device 10 and the response side device 30, thereby performing data transmission or data reception. Data transmitted and received at this point is encrypted using the encryption key stored in the storage unit 19 of the procedure starting side device 10 and the storage unit 39 of the response side device 30.

As described above, this embodiment is so configured that, before the short-range wireless communication is performed, the security information such as the encryption key or the authentication key for generation thereof is not spread by wireless. Thus, a noticeable effect is achieved in which there is little danger that the contents of the short-range wireless communication will be intercepted by a third party.

In this embodiment, compared with a conventional password manually input, the authentication key having a sufficient length for ensuring security can be introduced in the process of delivering the encryption key, and the need for considering an erroneous input and an operation error of the user involved in the above-mentioned manual input is also eliminated. The reason why these have been brought about is that since data exchange is performed through the barcode, the need for waiting for input of the user is eliminated, and that by placing terminals that perform interaction opposed to each other, a serious of data exchange can be completed.

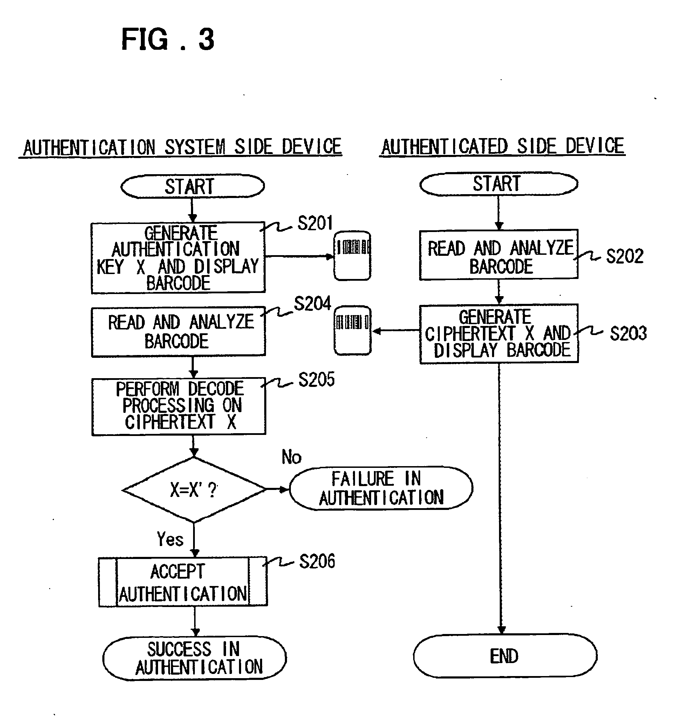

Further, as clear from the operation and effect of the above-mentioned embodiment, application to challenge response type authentication of other party is possible. Fig. 3 is a flowchart showing an example of an authentication method according to the present invention. Referring to Fig. 3, the procedure starting side device (authentication system side device) 10 first generates an authentication key x (challenge code) and converts the authentication key x into a barcode or the like, for display (at step S201). Next, the response side device (authenticated side device) 30 obtains the authentication key (challenge code) from the barcode or the like (at step S202) and performs predetermined encryption processing on this, thereby generating a response (ciphertext; response code). The response side device 30 converts the response into a barcode or the like, for display (at step S203). Finally, the procedure starting side device (authentication system side device) 10 obtains the response (ciphertext; response code) (at step S204) from the barcode or the like, and performs decoding processing corresponding to the predetermined encryption processing (at step S205). When its result is identical to the authentication key (challenge code), the procedure starting side device 10 performs authentication of the terminal of the other party (at step S206).

In a description about the above embodiment, a plurality of security information constituted from the authentication result X and the encryption key is handled as one data and converted into the barcode. According to the barcode standard, the barcode may be created and displayed individually. Alternatively, it is also possible to use a language such as an XML (eXtensible Mark-up Language).

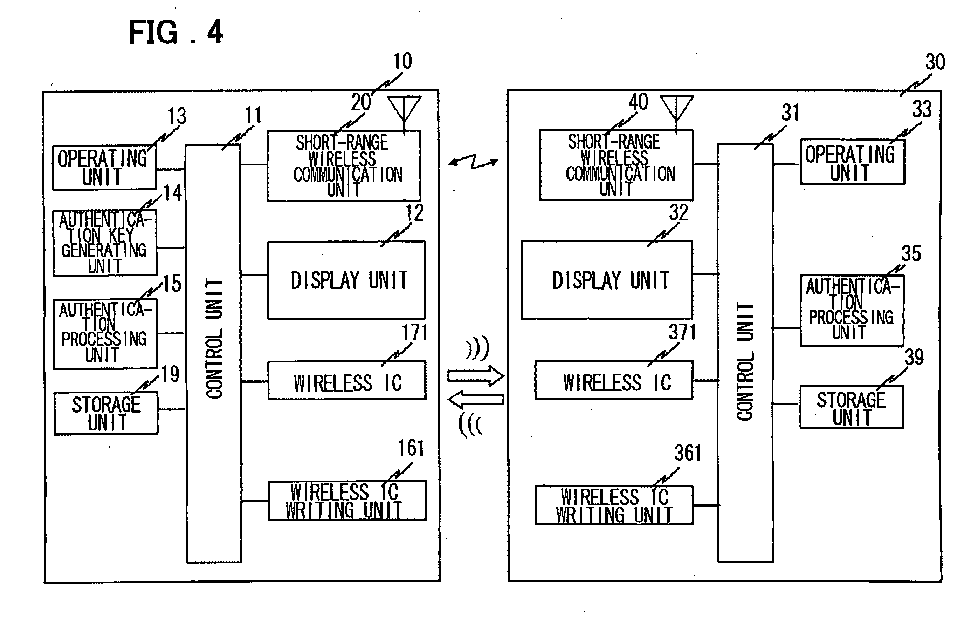

Next, a description will be directed to a second embodiment in which a non-contact type wireless IC is employed in place of the barcode in the first embodiment. Fig. 4 is a block diagram showing configurations of terminals according to the second embodiment of the present invention. Referring to Fig. 4, the procedure starting side device 10 and the response side device 30 are shown. The procedure starting side device 10 and the response side device 30 includes wireless IC writing units 161 and 361, respectively, and wireless ICs 171 and 371, respectively, in place of the barcode creating units 16 and 36, barcode reading units 17 and 37, and bar code analyzing units 18 and 38. Components that are common to those in the above-mentioned first embodiment will be omitted and a brief description will be given below.

The wireless IC writing units 161 and 361 are the units for writing a generated authentication key, an authentication result, an encryption key, and the like in the wireless ICs 171 and 371, respectively. The wireless IC 171 (371) is a unit for performing communication with the wireless IC 371 (171) located at an extremely close range.

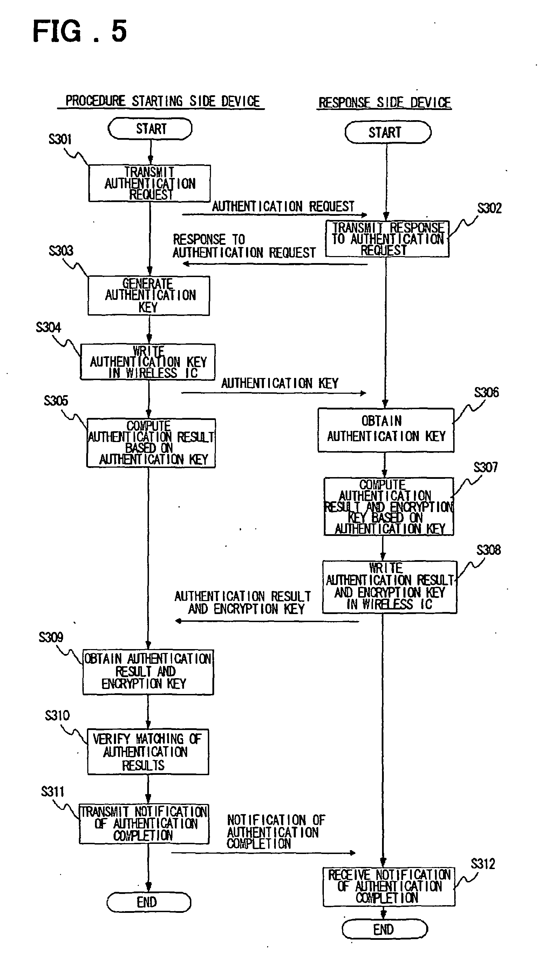

Next, operations of the procedure starting side device 10 and the response side device 30 of the above-mentioned configurations will be briefly described. Fig. 5 is a flowchart showing an operation of this embodiment. Referring to Fig. 5, as in the first embodiment described above, after an authentication request and the response to this have been made, the procedure starting side device 10 controls the authentication key generating unit 14 to generate an authentication key (at step S303). Then, the procedure starting side device 10 controls the wireless IC writing unit 161 to store the generated authentication key in the wireless IC 171 (at step S304). On the other hand, the response side device 30 that has transmitted the response to the authentication request controls the wireless IC 371 to read the authentication key stored in the wireless IC 171 of the procedure starting side device 10 (at step S306).

Next, the response side device 30 generates an authentication result X and an encryption key, using the authentication key (at step S307), as in the above-mentioned first embodiment, for storage in the storage unit 39. The response side device 30 controls the wireless IC writing unit 361 to store the authentication X and the encryption key in the wireless IC 371 (at step S308).

On the other hand, the procedure starting side device 10 also controls the authentication processing unit 15 to compute an authentication result X' from the authentication key (at step S305). The procedure starting side device 10 also controls the wireless IC 171 to read the authentication result X and the encryption key stored in the wireless IC writing unit 361 of the response side device 30 (at step S309), and verifies that the authentication result X thus obtained matches the authentication result X' computed by the procedure starting side device itself (at step S310).

When the authentication result X matches the authentication result X', the procedure starting side device 10 and the response side device 30 then control the short-distance wireless communication units 20 and 40, respectively, to perform data transmission and data reception using the short-range wireless communications technology between the procedure starting side device 10 and the response side device 30, as in the first embodiment described above.

As described above, this embodiment is also so configured that through the use of the non-contact type wireless ICs, interception of the security information such as the encryption key, authentication key for its generation, and the like is made almost impossible. Accordingly, a noticeable effect is achieved in which there is little danger that the contents of the short-range wireless communication will be intercepted by a third party.

The foregoing description was directed to the respective embodiments in which the security information such as the authentication key, encryption key, and result of authentication is exchanged using a barcode technology and a wireless IC technology. In view of the principle of the present invention, other equivalent technology such as an infrared communication technology can be employed.

Further, for connections between the same devices for a second time and later, generation of a secret code necessary for the subsequent and later connections and sharing the secret code between the devices may also be considered.

If the response side device 30 converts the result of authentication, encryption key, and secret code into a barcode, for display at step S109 in Fig. 2, for example, it becomes possible for the procedure starting side device 10 to read this barcode and obtain the result of authentication, encryption key, and secret code subsequently. Likewise, if the response side device 30 writes the result of authentication, encryption key, and secret code in the wireless IC 371 at step S308 in Fig. 5, it becomes possible for the procedure starting side device 10 to read the contents of the wireless IC 371 and obtain the secret code.

Further, a method of performing additional interaction for delivery of the secret code after step S114 in Fig. 2 and step S312 in Fig. 5 can also be adopted. In either case, by storing the secret code thus generated and delivered in the storage unit 19 (39) in combination with the address of other party's terminal, exchange and verifying processing of the authentication results can be omitted, for a certain period, for example.

Further, application of the present invention is not limited to the short-range wireless communication between portable type terminals such as cellular phones and PDAs equipped with various short-range wireless communication functions including the Bluetooth (registered mark) and the wireless LAN. The present invention can also be applied to the short-range wireless communication between a street terminal and a portable type terminal each having these functions. Further, according to an authentication procedure specified in specifications for these short-range wireless communications, the exchange timing of the authentication key and the encryption key and information to be exchanged can also be changed.

Further, a computation formula such as the one in which information (including the above-mentioned secret code) exchanged in the preceding connection described above is used to compute the result of authentication in place of the device address in the above-mentioned embodiments can also be used. With this arrangement, even if the barcode and information in the wireless IC have been stolen, derivation of the identical authentication result can be made more difficult.

As the above-mentioned authentication key, a key that has been generated to be difficult for identification from a third party suffices, and the above-mentioned authentication key can be generated using a random number generator for generating the random number, time stamp information, terminal location information, an address automatically assigned to a terminal, or the like, for example. It is, of course, preferable to combine these.

Formats for the above-mentioned authentication key and the above-mentioned encryption key may be original formats individually defined, or may be the one in accordance with key formats specified in the specifications for the various short-range wireless communications, as long as the formats are mutually recognized between the devices that perform communication.

Though encryption processing and decoding processing have been omitted in the embodiment mode and the respective embodiments described above for understanding of the present invention, it is also, of course, preferable that the encryption processing and the decoding processing are applied to the authentication key and the secret information (such as the encryption key) in the present invention.
It should be noted that other objects, features and aspects of the present invention will become apparent in the entire disclosure and that modifications from the disclosed embodiments may be done without departing the scope of the present invention claimed as appended herewith.
Also it should be noted that any combination of the disclosed and/or claimed elements, matters and/or items may fall under the modifications aforementioned.

## Claims

1. A method of performing other party terminal authentication between terminals each comprising a visible code reading unit capable of reading a visible code, said method comprising:
a first step (S201) of generating an authentication key x using a predetermined key generator according to a request from a second terminal and converting the authentication key x into a first visible code, for display, by a first terminal;
a second step (S202, S203) of reading the first visible code to extract the authentication key, performing a computation according to a predetermined encryption formula, thereby obtaining a ciphertext X from the authentication key x, and converting the ciphertext X into a second visible code, for display, by said second terminal; and
a step (S204, S205, S206) of reading the second visible code to extract the ciphertext X, obtaining an authentication key x' from the ciphertext X using a predetermined decoding formula, and authenticating said second terminal when the authentication key x matches the authentication key x', by said first terminal.

2. A terminal (10) comprising:
a visible code reading unit (17) capable of reading a visible code;
a visible code display unit (12, 14, 16) for generating an authentication key x using a predetermined key generator according to a request from an other terminal (30) and converting the authentication key x into a first visible code according to a predetermined rule, for display;
a visible code recognition unit (18) for reading a second visible code displayed on a visible code display unit (32) of said other terminal (30), thereby extracting a ciphertext X computed on a side of said other terminal using the authentication key x;
a computation unit (15) for obtaining an authentication key x' from the ciphertext X using a computation formula capable of decoding the ciphertext X; and
an authentication deciding unit (15) for authenticating said other terminal when the authentication key x matches the authentication key x'.

3. A terminal (30) comprising:
a visible code reading unit (37) capable of reading a visible code;
a visible code recognition unit (38) for extracting an authentication key x from the visible code displayed on a screen of an other terminal (10);
a computation unit (35) for performing a computation according to a predetermined computation formula, thereby obtaining a ciphertext X from the authentication key x; and
a visible code display unit (32) for converting the ciphertext X into a visible code according to a predetermined rule, for display;
said terminal being capable of being authenticated by the terminal (10) according to claim 2.

4. A computer program for causing a computer constituting a terminal (10) comprising a visible code reading unit (17) for reading a visible code, a visible code recognition unit (18) for extracting information corresponding to the visible code according to a predetermined rule, and a visible code display unit (12, 14, 16) for displaying the visible code, to perform:
a step (S201) of generating an authentication key using a predetermined key generator according to a request from an other terminal and converting the generated authentication key into a first visible code according to a predetermined rule, for display;
a step (S204) of reading a second visible code displayed on the visible code display unit of said other terminal, thereby extracting a computation result X computed from the authentication key according to a predetermined computation formula on a side of said other terminal;
a step (S205) of obtaining a computation result X' from the authentication key according to the predetermined computation formula; and
a step (S206) of authenticating said other terminal when the computation result X matches the computation result X'.

5. A computer program for causing a computer constituting a terminal (30) comprising a visible code reading unit (37) for reading a visible code, a visible code recognition unit (38) for extracting information corresponding to the visible code according to a predetermined rule, and a visible code display unit (32) for displaying the visible code, to perform:
a step (S202) of extracting an authentication key from the read visible code;
a step (S203) of performing a computation according to a predetermined computation formula, thereby obtaining a computation result X from the authentication key; and
a step (S203) of converting the computation result X into a visible code, collectively, for display;
said terminal being capable of being authenticated by the terminal according to claim 2.

## Patentansprüche

1. Verfahren zum Ausführen einer Authentifizierung eines Endgeräts eines anderen Teilnehmers zwischen Endgeräten, die jeweils eine Einheit zum Lesen eines sichtbaren Codes aufweisen, welches folgende Schritte aufweist:
einen ersten Schritt (S201) zum Erzeugen eines Authentifizierungsschlüssels x unter Verwendung eines vorbestimmten Schlüsselgenerators entsprechend einer Anforderung von einem zweiten Endgerät und zum Umwandeln des Authentifizierungsschlüssels x in einen ersten sichtbaren Code zur Anzeige durch ein erstes Endgerät,
einen zweiten Schritt (S202, S203) zum Lesen des ersten sichtbaren Codes, um den Authentifizierungsschlüssel zu extrahieren, zum Ausführen einer Berechnung entsprechend einer vorbestimmten Verschlüsselungsformel, um dadurch einen verschlüsselten Text X anhand des Authentifizierungsschlüssels x zu erhalten, und zum Umwandeln des verschlüsselten Texts X in einen zweiten sichtbaren Code zur Anzeige durch das zweite Endgerät, und
einen Schritt (S204, S205, S206) zum Lesen des zweiten sichtbaren Codes, um den verschlüsselten Text X zu extrahieren, zum Erhalten eines Authentifizierungsschlüssels x' anhand des verschlüsselten Texts X unter Verwendung einer vorbestimmten Decodierformel und zum Authentifizieren des zweiten Endgeräts, wenn der Authentifizierungsschlüssel x mit dem Authentifizierungsschlüssel x' übereinstimmt, durch das erste Endgerät.

2. Endgerät (10), welches aufweist:
eine Einheit (17) zum Lesen eines sichtbaren Codes,
eine Einheit (12, 14, 16) zum Anzeigen eines sichtbaren Codes zum Erzeugen eines Authentifizierungsschlüssels x unter Verwendung eines vorbestimmten Schlüsselgenerators entsprechend einer Anforderung von einem anderen Endgerät (30) und zum Umwandeln des Authentifizierungsschlüssels x in einen ersten sichtbaren Code entsprechend einer vorbestimmten Regel für die Anzeige,
eine Einheit (18) zur Erkennung eines sichtbaren Codes zum Lesen eines zweiten sichtbaren Codes, der auf einer Einheit (32) zum Anzeigen eines sichtbaren Codes des anderen Endgeräts (30) angezeigt wird, wodurch ein verschlüsselter Text X extrahiert wird, der unter Verwendung des Authentifizierungsschlüssels x auf der Seite des anderen Endgeräts berechnet wurde,
eine Berechnungseinheit (15) zum Erhalten eines Authentifizierungsschlüssels x' anhand des verschlüsselten Texts X unter Verwendung einer Berechnungsformel, die in der Lage ist, den verschlüsselten Text X zu decodieren, und
eine Authentifizierungsentscheidungseinheit (15) zum Authentifizieren des anderen Endgeräts, wenn der Authentifizierungsschlüssel x mit dem Authentifizierungsschlüssel x' übereinstimmt.

3. Endgerät (30), welches aufweist:
eine Einheit (37) zum Lesen eines sichtbaren Codes,
eine Einheit (38) zur Erkennung eines sichtbaren Codes zum Extrahieren eines Authentifizierungsschlüssels x aus dem auf einem Bildschirm eines anderen Endgeräts (10) angezeigten sichtbaren Code,
eine Berechnungseinheit (35) zum Ausführen einer Berechnung entsprechend einer vorbestimmten Berechnungsformel, um dadurch einen verschlüsselten Text X anhand des Authentifizierungsschlüssels x zu erhalten, und
eine Einheit (32) zum Anzeigen eines sichtbaren Codes zum Umwandeln des verschlüsselten Texts X in einen sichtbaren Code entsprechend einer vorbestimmten Regel für die Anzeige,
wobei das Endgerät durch das Endgerät (10) nach Anspruch 2 authentifiziert werden kann.

4. Computerprogramm, das einen Computer, der ein Endgerät (10) bildet, das eine Einheit (17) zum Lesen eines sichtbaren Codes, eine Einheit (18) zur Erkennung eines sichtbaren Codes zum Extrahieren von dem sichtbaren Code entsprechenden Informationen gemäß einer vorbestimmten Regel, und eine Einheit (12, 14, 16) zum Anzeigen eines sichtbaren Codes aufweist, veranlasst, folgende Schritte auszuführen:
einen Schritt (S201) zum Erzeugen eines Authentifizierungsschlüssels unter Verwendung eines vorbestimmten Schlüsselgenerators entsprechend einer Anforderung von einem anderen Endgerät und zum Umwandeln des erzeugten Authentifizierungsschlüssels in einen ersten sichtbaren Code entsprechend einer vorbestimmten Regel für die Anzeige,
einen Schritt (S204) zum Lesen eines zweiten sichtbaren Codes, der auf der Einheit zum Anzeigen eines sichtbaren Codes des anderen Endgeräts angezeigt wird, um dadurch ein Berechnungsergebnis X zu extrahieren, das anhand des Authentifizierungsschlüssels entsprechend einer vorbestimmten Berechnungsformel auf der Seite des anderen Endgeräts berechnet wurde,
einen Schritt (S205) zum Erhalten eines Berechnungsergebnisses X' anhand des Authentifizierungsschlüssels entsprechend der vorbestimmten Berechnungsformel und
einen Schritt (S206) zum Authentifizieren des anderen Endgeräts, wenn das Berechnungsergebnis X mit dem Berechnungsergebnis X' übereinstimmt.

5. Computerprogramm, das einen Computer, der ein Endgerät (30) bildet, das eine Einheit (37) zum Lesen eines sichtbaren Codes, eine Einheit (38) zur Erkennung eines sichtbaren Codes zum Extrahieren von dem sichtbaren Code entsprechenden Informationen gemäß einer vorbestimmten Regel, und eine Einheit (32) zum Anzeigen eines sichtbaren Codes aufweist, veranlasst, folgende Schritte auszuführen:
einen Schritt (S202) zum Extrahieren eines Authentifizierungsschlüssels anhand des gelesenen sichtbaren Codes,
einen Schritt (S203) zum Ausführen einer Berechnung entsprechend einer vorbestimmten Berechnungsformel, um dadurch ein Berechnungsergebnis X anhand des Authentifizierungsschlüssels zu erhalten, und
einen Schritt (S203) zum kollektiven Umwandeln des Berechnungsergebnisses X in einen sichtbaren Code für die Anzeige,
wobei das Endgerät durch das Endgerät nach Anspruch 2 authentifiziert werden kann.

## Revendications

1. Procédé d'exécution d'une authentification de terminal d'autre partie entre des terminaux comprenant chacun une unité de lecture de code visible capable de lire un code visible, ledit procédé comprenant :
une première étape (S201) consistant à générer une clé d'authentification x en utilisant un générateur de clé prédéterminé selon une demande en provenance d'un second terminal et à convertir la clé d'authentification x en un premier code visible, pour l'affichage, par un premier terminal ;
une seconde étape (S202, S203) consistant à lire le premier code visible pour extraire la clé d'authentification, à effectuer un calcul selon une formule de chiffrement prédéterminée, obtenant ainsi un texte chiffré X à partir de la clé d'authentification x, et à convertir le texte chiffré X en un second code visible, pour l'affichage, par ledit second terminal ; et
une étape (S204, S205, S206) consistant à lire le second code visible pour extraire le texte chiffré X, à obtenir une clé d'authentification x' à partir du texte chiffré X en utilisant une formule de décodage prédéterminée, et à authentifier ledit second terminal lorsque la clé d'authentification x concorde avec la clé d'authentification x', par ledit premier terminal.

2. Terminal (10) comprenant :
une unité de lecture de code visible (17) capable de lire un code visible ;
une unité d'affichage de code visible (12, 14, 16) pour générer une clé d'authentification x en utilisant un générateur de clé prédéterminé selon une demande en provenance d'un autre terminal (30) et convertir la clé d'authentification x en un premier code visible selon une règle prédéterminée, pour l'affichage ;
une unité de reconnaissance de code visible (18) pour lire un second code visible affiché sur une unité d'affichage de code visible (32) dudit autre terminal (30), extrayant ainsi un texte chiffré X calculé du côté dudit autre terminal en utilisant la clé d'authentification x ;
une unité de calcul (15) pour obtenir une clé d'authentification x' à partir du texte chiffré X en utilisant une formule de calcul capable de décoder le texte chiffré X ; et
une unité de décision d'authentification (15) pour authentifier ledit autre terminal lorsque la clé d'authentification x concorde avec la clé d'authentification x'.

3. Terminal (30) comprenant :
une unité de lecture de code visible (37) capable de lire un code visible ;
une unité de reconnaissance de code visible (38) pour extraire une clé d'authentification x du code visible affiché sur un écran d'un autre terminal (10) ;
une unité de calcul (35) pour effectuer un calcul selon une formule de calcul prédéterminée, obtenant ainsi un texte chiffré X à partir de la clé d'authentification x ; et
une unité d'affichage de code visible (32) pour convertir le texte chiffré X en un code visible selon une règle prédéterminée, pour l'affichage ;
ledit terminal étant capable d'être authentifié par le terminal (10) selon la revendication 2.

4. Programme informatique pour amener un ordinateur constituant un terminal (10) comprenant une unité de lecture de code visible (17) pour lire un code visible, une unité de reconnaissance de code visible (18) pour extraire des informations correspondant au code visible selon une règle prédéterminée, et une unité d'affichage de code visible (12, 14, 16) pour afficher le code visible, à effectuer :
une étape (S201) consistant à générer une clé d'authentification en utilisant un générateur de clé prédéterminé selon une demande en provenance d'un autre terminal et à convertir la clé d'authentification générée en un premier code visible selon une règle prédéterminée, pour l'affichage ;
une étape (S204) consistant à lire un second code visible affiché sur l'unité d'affichage de code visible dudit autre terminal, extrayant ainsi un résultat de calcul X calculé à partir de la clé d'authentification selon une formule de calcul prédéterminée du côté dudit autre terminal ;
une étape (S205) consistant à obtenir un résultat de calcul X' à partir de la clé d'authentification selon la formule de calcul prédéterminée ; et
une étape (S206) consistant à authentifier ledit autre terminal lorsque le résultat de calcul X concorde avec le résultat de calcul X'.

5. Programme informatique pour amener un ordinateur constituant un terminal (30) comprenant une unité de lecture de code visible (37) pour lire un code visible, une unité de reconnaissance de code visible (38) pour extraire des informations correspondant au code visible selon une règle prédéterminée, et une unité d'affichage de code visible (32) pour afficher le code visible, à effectuer :
une étape (S202) consistant à extraire une clé d'authentification du code visible lu ;
une étape (S203) consistant à effectuer un calcul selon une formule de calcul prédéterminée, obtenant ainsi un résultat de calcul X à partir de la clé d'authentification ; et
une étape (S203) consistant à convertir le résultat de calcul X en un code visible, collectivement, pour l'affichage ;
ledit terminal étant capable d'être authentifié par le terminal selon la revendication 2.
